# FASCICULE DE BREVET EUROPEEN

(11) **EP 2 590 826 B1**
(45) Date de publication et mention de la délivrance du brevet: **07.01.2015**
(21) Numéro de dépôt: 11728889.4
(22) Date de dépôt: 05.07.2011
(51) Int. Cl.: B60C 9/18

(54) **ARMATURE DE SOMMET POUR PNEUMATIQUE D'AVION**
GÜRTELVERSTÄRKUNG FÜR EINEN FLUGZEUGREIFEN
CROWN REINFORCEMENT FOR AIRCRAFT TYRE

(30) Priorité: 07.07.2010 FR 1055496
(43) Date de publication de la demande: 15.05.2013
(73) Titulaire: COMPAGNIE GENERALE DES ETABLISSEMENTS MICHELIN, 63000 Clermont-Ferrand (FR); Michelin Recherche et Technique S.A., 1763 Granges-Paccot (CH)
(72) Inventeur: ESTENNE, Vincent, F-63040 Clermont Ferrand Cedex 09 (FR); BUCHER, Laurent, F-63040 Clermont Ferrand Cedex 9 (FR)
(74) Mandataire: Le Cam, Stéphane Georges Elie
(86) Numéro de dépôt international: PCT/EP2011/061271
(87) Numéro de publication internationale: WO 2012/004238

(56) Documents cités:
- EP-A1- 2 202 094
- DE-A1-102007 049 872
- FR-A1- 2 730 456
- US-A1- 2007 235 116

## Description

La présente invention concerne un pneumatique pour avion, et, en particulier, l'armature de sommet d'un pneumatique pour avion comprenant des couches d'éléments de renforcement textiles.

Un pneumatique ayant une géométrie de révolution par rapport à un axe de rotation, la géométrie du pneumatique peut être décrite dans un plan méridien contenant l'axe de rotation du pneumatique. Pour un plan méridien donné, les directions radiale, axiale et circonférentielle désignent respectivement les directions perpendiculaire à l'axe de rotation du pneumatique, parallèle à l'axe de rotation du pneumatique et perpendiculaire au plan méridien. Dans ce qui suit, les expressions « radialement intérieur » et « radialement extérieur» signifient respectivement « plus proche de l'axe de rotation du pneumatique, selon la direction radiale » et « plus éloigné de l'axe de rotation du pneumatique, selon la direction radiale ». Les expressions « axialement intérieur » et « axialement extérieur» signifient respectivement « plus proche du plan équatorial, selon la direction axiale » et « plus éloigné du plan équatorial, selon la direction axiale », le plan équatorial étant le plan perpendiculaire à l'axe de rotation du pneumatique et passant par le milieu de la surface de roulement du pneumatique.

Un pneumatique pour avion se caractérise par une pression nominale supérieure à 9 bars et un taux de flèche nominal supérieur ou égal à 32%. La pression nominale est la pression de gonflage nominale du pneumatique telle que définie, par exemple, par la norme de la Tire and Rim Association ou TRA. Le taux de flèche nominal d'un pneumatique est, par définition, sa déformation radiale, ou sa variation de hauteur radiale, lorsque celui-ci passe d'un état gonflé non chargé à un état gonflé chargé en statique, dans les conditions de pression et de charge nominales telles que définies, par exemple, par la norme TRA. Elle est exprimée sous la forme d'une flèche relative, définie par le rapport de cette variation de la hauteur radiale du pneumatique sur la moitié de la différence entre le diamètre extérieur du pneumatique et le diamètre maximum de la jante mesuré sur le rebord de jante. Le diamètre extérieur du pneumatique est mesuré en statique dans un état non chargé gonflé à la pression nominale.

Un pneumatique comprend, de façon générale, un sommet comprenant une bande roulement destinée à venir en contact avec le sol par l'intermédiaire d'une surface de roulement, deux bourrelets destinés à venir en contact avec une jante et deux flancs reliant le sommet aux bourrelets. Un pneumatique radial, telle que généralement utilisé pour un avion, comprend plus particulièrement une armature de carcasse radiale et une armature de sommet, telles que décrites, par exemple, dans le document EP1381525.

L'armature de carcasse radiale est la structure de renforcement du pneumatique reliant les deux bourrelets du pneumatique. L'armature de carcasse radiale d'un pneumatique pour avion comprend généralement au moins une couche d'armature de carcasse, chaque couche d'armature de carcasse étant constituée d'éléments de renforcement le plus souvent textiles, parallèles entre eux et faisant, avec la direction circonférentielle, un angle compris entre 80° et 100°.

L'armature de sommet est la structure de renforcement du pneumatique radialement intérieure à la bande de roulement et au moins en partie radialement extérieure à l'armature de carcasse radiale. L'armature de sommet d'un pneumatique pour avion comprend généralement au moins une couche d'armature de sommet, chaque couche d'armature de sommet étant constituée d'éléments de renforcement parallèles entre eux et enrobés dans un matériau polymérique d'enrobage. Parmi les couches d'armature de sommet, on distingue les couches d'armature de travail composant l'armature de travail, constituées le plus souvent d'éléments de renforcement textiles, et les couches d'armature de protection composant l'armature de protection, constituées d'éléments de renforcement métalliques ou textiles et disposées radialement à l'extérieur de l'armature de travail.

Lors de la fabrication d'un pneumatique pour avion, une couche d'armature de travail est le plus souvent réalisée par un enroulement en zigzag ou par un enroulement en spires de bandelettes constituées d'éléments de renforcement textiles, autour d'un dispositif de fabrication cylindrique, en opérant une translation de direction axiale de la bandelette à chaque tour d'enroulement, de façon à obtenir la largeur axiale attendue de couche d'armature de travail. La couche d'armature de travail est ainsi constituée de bandelettes axialement juxtaposées. Par enroulement en zigzag, on entend un enroulement, selon une courbe formée d'ondulations périodiques, soit sur une demi période par tour d'enroulement, soit sur une période par tour d'enroulement, l'angle des éléments de renforcement textiles des bandelettes étant généralement compris entre 8° et 30° par rapport à la direction circonférentielle. Pour une couche d'armature de travail réalisée par enroulement en spires, l'angle des éléments de renforcement textiles des bandelettes est généralement compris entre 0° et 8° par rapport à la direction circonférentielle. Quel que soit le type d'enroulement des bandelettes, l'angle des éléments de renforcement textiles des bandelettes est donc généralement inférieur à 30° par rapport à la direction circonférentielle. Pour cette raison, les bandelettes ainsi que la couche de travail résultante sont dites globalement circonférentielles, c'est-à-dire de direction générale circonférentielle avec des ondulations d'amplitude limitée autour de la direction circonférentielle.

Les éléments de renforcement des couches d'armature de travail sont parallèles entre eux, c'est-à-dire que la distance entre les courbes géométriques de deux éléments de renforcement adjacents est constante, les courbes géométriques pouvant présenter des ondulations périodiques.

Les éléments de renforcement des couches d'armature de carcasse et des couches d'armature de travail, pour les pneumatiques d'avion, sont le plus souvent des câbles constitués de filés de filaments textiles, préférentiellement en polyamides aliphatiques ou en polyamides aromatiques. Les éléments de renforcement des couches d'armature de protection peuvent être soit des câbles constitués de fils métalliques, soit des câbles constitués de filés de filaments textiles.

Les propriétés mécaniques en extension (module, allongement et force à la rupture) des éléments de renforcement textiles sont mesurées après un conditionnement préalable. Par "conditionnement préalable", on entend le stockage des éléments de renforcement textiles pendant au moins 24 heures, avant mesure, dans une atmosphère standard selon la norme européenne DIN EN 20139 (température de 20 ± 2°C ; hygrométrie de 65 ± 2 %). Les mesures sont réalisées de manière connue à l'aide d'une machine de traction ZWICK GmbH & Co (Allemagne) de type 1435 ou de type 1445. Les éléments de renforcement textiles subissent une traction sur une longueur initiale de 400 mm à une vitesse nominale de 200 mm/min. Tous les résultats sont une moyenne de 10 mesures.

Un matériau polymérique, tel que le matériau polymérique d'enrobage des éléments de renforcement textiles des couches d'armature de travail, est caractérisé mécaniquement, après cuisson, par des caractéristiques de contrainte-déformation en traction, déterminées par des essais de traction. Ces essais de traction sont effectués, sur une éprouvette, selon une méthode connue de l'homme du métier, par exemple conformément à la norme internationale ISO 37, et dans les conditions normales de température (23 + ou - 2°C) et d'hygrométrie (50 + ou -5% d'humidité relative), définies par la norme internationale ISO 471. On appelle module d'élasticité à 10% d'allongement d'un mélange polymérique, exprimé en méga pascals (MPa), la contrainte de traction mesurée pour un allongement de 10% de l'éprouvette.

En utilisation, les sollicitations mécaniques de roulage, résultant de l'action combinée de la pression nominale, de la charge appliquée au pneumatique pouvant varier entre 0 et 2 fois la charge nominale, et de la vitesse de l'avion, induisent des cycles de tensions dans les éléments de renforcement des couches d'armature de travail.

Ces cycles de tensions génèrent, dans le matériau polymérique d'enrobage des éléments de renforcement des couches d'armature de travail, des sources de chaleur, en particulier aux extrémités axiales des couches d'armature de travail. Ces sources de chaleur sont des points chauds localisés pour lesquels l'évacuation de la chaleur est difficile, car la chaleur doit pouvoir se propager soit à travers le matériau polymérique d'enrobage, soit à travers les éléments de renforcement textiles. Or le matériau polymérique d'enrobage, en raison de sa faible conductivité thermique, est un mauvais conducteur de chaleur. De même, les éléments de renforcement textiles, en raison de leur faible conductivité thermique, ne peuvent contribuer efficacement à l'évacuation de la chaleur. Il en résulte un échauffement excessif du matériau polymérique d'enrobage, dommageable à sa bonne tenue mécanique et susceptible d'entraîner sa dégradation, et, par conséquent, une déchéance prématurée du pneumatique.

Diverses solutions techniques ont été envisagées pour créer un chemin d'évacuation de la chaleur générée au niveau de l'armature de travail. Les documents EP1031441 et JP2007131282 présentent des matériaux polymériques thermo conducteurs, à conductivité thermique augmentée. Le document EP1548057 propose des matériaux polymériques incluant des nanotubes de carbone permettant d'augmenter la conductivité thermique. Le document EP1483122 décrit un drain thermique, sous forme de câbles métalliques disposés dans un plan méridien, et inséré à l'extrémité de l'armature de travail. Enfin, le document KR812810 propose un insert thermoconducteur, pouvant être métallique et disposé en extrémité d'armature de travail.

Les inventeurs se sont donnés pour objectif d'améliorer l'évacuation de la chaleur générée dans l'armature de travail d'un pneumatique pour avion, depuis les points les plus chauds, généralement localisés en extrémités des couches d'armatures de travail, vers les points les moins chauds, généralement localisés dans la zone centrale de l'armature de travail, afin d'obtenir une répartition plus homogène des températures dans le sommet du pneumatique, tout en minimisant l'impact sur les sollicitations de l'armature de travail.

Cet objectif a été atteint, selon l'invention, par un pneumatique pour avion, comprenant :
- un sommet destiné à entrer en contact avec le sol par l'intermédiaire d'une bande de roulement et relié par deux flancs à deux bourrelets destinés à entrer en contact avec une jante,
- une armature de carcasse radiale reliant les deux bourrelets,
- une armature de sommet, radialement intérieure à la bande de roulement et radialement extérieure à l'armature de carcasse radiale, comprenant une armature de travail et une armature de protection,

- l'armature de travail, radialement intérieure à l'armature de protection, comprenant au moins une couche d'armature de travail,
- chaque couche d'armature de travail étant constituée de bandelettes globalement circonférentielles, axialement juxtaposées,
- chaque bandelette étant constituée d'éléments de renforcement textiles parallèles entre eux enrobés par un matériau polymérique d'enrobage,
- chaque bandelette d'au moins une couche d'armature de travail est en contact, sur au moins sa face axiale radialement intérieure, avec un élément de transfert thermique, comprenant des éléments filaires globalement circonférentiels, parallèles entre eux et constitués d'un matériau conducteur de chaleur,
- la conductivité thermique du matériau conducteur de chaleur d'un élément filaire globalement circonférentiel étant au moins égale à 50 fois la conductivité thermique du matériau polymérique d'enrobage des éléments de renforcement textiles de la bandelette en contact avec l'élément de transfert thermique,
- et un élément de transfert thermique comprenant des éléments filaires globalement circonférentiels présentant des oscillations géométriques périodiques parallèles à la bandelette en contact.

Selon l'invention, chaque bandelette d'au moins une couche d'armature de travail est avantageusement en contact avec un élément de transfert thermique, sur au moins sa face axiale radialement intérieure, c'est-à-dire la face de la bandelette parallèle à l'axe de rotation du pneumatique et radialement la plus proche de l'axe de rotation du pneumatique.

Un élément de transfert thermique comprend des éléments filaires globalement circonférentiels, c'est-à-dire tels que l'angle des éléments filaires éventuellement variable circonférentiellement est inférieur à 30° par rapport à la direction circonférentielle. Les éléments filaires sont parallèles entre eux, c'est-à-dire que la distance entre les courbes géométriques de deux éléments filaires adjacents est constante, les courbes géométriques pouvant présenter des ondulations périodiques.

Les éléments filaires sont constitués d'un matériau conducteur de chaleur. Par matériau conducteur de chaleur constitutif d'un élément filaire, on entend un matériau dont la conductivité thermique est élevée, tel que, par exemple, un matériau métallique. La conductivité thermique d'un matériau est une grandeur physique, exprimée en W.m⁻¹.K⁻¹, caractérisant l'aptitude d'un matériau à transporter des calories. Un matériau conducteur de chaleur est d'autant plus performant en terme de transport de calories que sa conductivité thermique est élevée.

A contrario, par matériau non conducteur de chaleur ou, plus exactement, faiblement conducteur de chaleur, on entend un matériau dont la conductivité thermique est faible, tel que, par exemple, un matériau polymérique conventionnel, classiquement utilisé dans un pneumatique.

La chaleur ou énergie calorifique générée à une extrémité axiale de la couche d'armature de travail est évacuée par l'élément de transfert thermique en contact avec la bandelette située en extrémité axiale de la couche d'armature de travail. Cet élément de transfert thermique d'extrémité, constitué d'éléments filaires globalement circonférentiels, va d'une part répartir sur la circonférence de la couche une partie des calories évacuées par l'intermédiaire de ses éléments filaires globalement circonférentiels, d'autre part transmettre une autre partie des calories évacuées axialement vers l'intérieur à l'élément de transfert thermique suivant. La chaleur est ainsi évacuée, de proche en proche, à la fois circonférentiellement et axialement.

Le transfert thermique selon la direction circonférentielle est efficace, du fait qu'il est réalisé par les éléments filaires globalement circonférentiels constitués d'un matériau conducteur de chaleur.

En revanche, le transfert thermique selon la direction axiale semble a priori moins efficace que le transfert thermique selon la direction circonférentielle, car il n'y a pas de matériau continûment conducteur dans la direction axiale. Cet inconvénient est toutefois compensé soit par la pose en zigzag qui établit une continuité conductrice entre les extrémités de la couche d'armature de travail, soit par la pose en spires assurant le transfert thermique axial de spire en spire.

Ce transfert thermique, qui vise à homogénéiser les températures entre les extrémités axiales et le centre de la couche d'armature de travail, est possible car les températures sont plus élevées entre les extrémités axiales et le centre de la couche d'armature de travail, d'où un gradient de températures à l'origine de la conduction de chaleur.

Pour que les calories soient évacuées préférentiellement par les éléments filaires globalement circonférentiels des éléments de transfert thermique en contact avec les bandelettes constitutives d'une couche d'armature de travail, la conductivité thermique d'un matériau conducteur de chaleur d'un élément filaire globalement circonférentiel doit être significativement supérieure à celle du matériau polymérique d'enrobage des éléments de renforcement textiles de la bandelette en contact avec l'élément de transfert thermique, le matériau polymérique d'enrobage étant par nature faiblement conducteur de chaleur. Les inventeurs ont montré qu'une conductivité thermique d'un matériau conducteur de chaleur au moins égale à 50 fois celle du matériau polymérique d'enrobage des éléments de renforcement textiles de la bandelette en contact avec l'élément de transfert thermique permettait d'évacuer une quantité de calories suffisante pour abaisser le niveau thermique en extrémité axiale de couche d'armature de travail à un niveau acceptable, c'est-à-dire non susceptible d'entraîner une dégradation des matériaux concernés.

Encore selon l'invention, un élément de transfert thermique comprend des éléments filaires globalement circonférentiels présentant des oscillations géométriques périodiques parallèles à la bandelette en contact.

Il est en effet avantageux que les éléments filaires globalement circonférentiels d'un élément de transfert thermique présentent des oscillations géométriques périodiques parallèles à la bandelette en contact, c'est-à-dire autour de la direction radiale. Ces oscillations géométriques périodiques peuvent être, de façon non exhaustive, des plis en forme de V alternés ou des ondulations en forme de sinusoïde. La présence d'oscillations géométriques périodiques augmente la capacité d'extension circonférentielle de l'élément de transfert thermique et, par conséquent, diminue le risque de rupture en extension de l'élément de transfert thermique.

Avantageusement, le rapport entre l'amplitude crête-crête des oscillations géométriques périodiques et la longueur d'onde de la période est supérieur à 0.05 pour assurer à l'élément de transfert thermique une capacité d'extension circonférentielle suffisante.

Avantageusement, chaque bandelette de chaque couche d'armature de travail est en contact, sur au moins sa face axiale radialement intérieure, avec un élément de transfert thermique, comprenant des éléments filaires globalement circonférentiels, parallèles entre eux et constitués d'un matériau conducteur de chaleur. La chaleur générée aux extrémités axiales de chacune des couches d'armature de travail, et non seulement celle générée aux extrémités axiales ayant les températures les plus élevées, est avantageusement évacuée, en vue d'une homogénéisation des températures au niveau de chaque couche d'armature de travail et donc dans toute l'épaisseur de l'armature radiale.

Encore avantageusement, un élément de transfert thermique est constitué d'au moins une bande globalement circonférentielle. Une bande globalement circonférentielle d'élément de transfert thermique est un élément s'étendant sur toute la périphérie du pneumatique en restant au contact d'une bandelette de couche d'armature de travail. La section méridienne d'une bande globalement circonférentielle est un rectangle, dont la plus petite dimension est de direction radiale et la plus grande dimension est de direction axiale. Une bande globalement circonférentielle suit le trajet globalement circonférentiel de la bandelette avec laquelle elle est en contact.

Un premier mode de réalisation préféré est d'avoir un élément de transfert thermique constitué d'une bande globalement circonférentielle unique, dont la largeur axiale est égale à la largeur axiale de la bandelette en contact avec l'élément de transfert thermique. Un tel mode de réalisation dans lequel la largeur axiale de la bande globalement circonférentielle unique est égale à la largeur axiale de la bandelette est avantageux au niveau de la fabrication du pneumatique. En effet, un assemblage préalable de la bandelette et de la bande globalement circonférentielle unique peut être réalisé au niveau élémentaire de la bandelette, puis l'assemblage ainsi réalisé de la bandelette et de la bande globalement circonférentielle unique peut être enroulé sur le dispositif cylindrique permettant de réaliser la couche d'armature de travail. En outre, la continuité de la conduction de chaleur dans les directions circonférentielle et axiale est assurée par la continuité de chaque bande métallique globalement circonférentielle unique, et par l'enroulement circonférentiel spiroïdal ou en zigzag de la bandelette. Ainsi, ce mode de réalisation permet une évacuation optimale de la chaleur générée en extrémités de couche d'armature de travail à la fois dans la direction axiale et dans la direction circonférentielle.

Selon un second mode de réalisation de l'invention, un élément de transfert thermique est constitué d'une pluralité de bandes globalement circonférentielles axialement juxtaposées, dont la largeur axiale, qui est la somme des largeurs axiales des bandes globalement circonférentielles élémentaires, est égale à la largeur axiale de la bandelette en contact avec l'élément de transfert thermique. Ce second mode de réalisation est une variante de fabrication du premier mode de réalisation bande globalement circonférentielle unique.

Un troisième mode de réalisation de l'invention est caractérisé par un élément de transfert thermique constitué d'une pluralité de bandes globalement circonférentielles axialement disjointes, réparties sur la largeur axiale de la bandelette en contact avec l'élément de transfert thermique. Dans ce mode de réalisation, un élément de transfert thermique est ainsi constitué d'une pluralité de bandes globalement circonférentielles deux à deux disjointes selon la direction axiale: ce qui implique que la somme des largeurs axiales des bandes globalement circonférentielles est inférieure à la largeur axiale de la bandelette avec laquelle les bandes globalement circonférentielles sont en contact. Du fait de cette discontinuité géométrique entre les bandes globalement circonférentielles, la conduction de la chaleur n'est pas assurée de façon continue selon la direction axiale, mais est assurée de façon continue selon la direction circonférentielle. Toutefois, un tel mode de réalisation permet d'avoir des rigidités de l'élément de transfert thermique, constitué de bandes globalement circonférentielles disjointes, inférieures à celles d'un élément de transfert thermique, constitué d'une bande globalement circonférentielle unique. Comme dans le deuxième mode de réalisation, la rigidité de flexion autour d'une direction radiale d'une pluralité de bandes globalement circonférentielles deux à deux disjointes est inférieure à la rigidité de flexion autour d'une direction radiale d'une bande globalement circonférentielle unique. De plus la rigidité d'extension circonférentielle de l'élément de transfert thermique, selon ce mode de réalisation, a une faible contribution à la rigidité d'extension circonférentielle de l'assemblage de la bandelette et de l'élément de transfert thermique : ce qui permet un enroulement facilité de l'assemblage de la bandelette et de l'élément de transfert thermique autour du dispositif cylindrique lors de la fabrication de la couche d'armature de travail.

Un élément de transfert thermique comprend avantageusement un matériau polymérique d'enrobage des éléments filaires globalement circonférentiels, pour faciliter la fabrication et la tenue mécanique de l'élément de transfert thermique, ainsi que son assemblage à la bandelette avec laquelle il est en contact.

Selon l'invention, tout élément filaire globalement circonférentiel d'un élément de transfert thermique est un câble constitué par un assemblage de fils élémentaires, dont la fabrication industrielle est maîtrisée.

Selon une autre caractéristique de l'invention, tout élément filaire globalement circonférentiel d'un élément de transfert thermique est un câble métallique, un métal étant par nature significativement plus conducteur de chaleur que le matériau polymérique d'enrobage compris dans une bandelette de couche d'armature de travail. A titre d'exemple, un matériau métallique, tel que, par exemple, l'aluminium, a une conductivité thermique égale à 200 W.m⁻¹.K⁻¹ alors qu'un matériau polymérique a une conductivité thermique égale à 0.3 W.m⁻¹.K⁻¹.

Préférentiellement, tout élément filaire globalement circonférentiel d'un élément de transfert thermique est un câble en aluminium. L'aluminium nécessite un revêtement d'interface pour adhérer au matériau polymérique d'enrobage de la bandelette en contact ; à cette fin plusieurs techniques sont disponibles : revêtement de type laiton, de type organique (silane ou amino-silane), époxy ou colles commerciales.

Avantageusement, tout élément filaire globalement circonférentiel d'un élément de transfert thermique a un diamètre au plus égal à 0.9 mm. Cette section doit être suffisante pour assurer la fonction d'évacuation de la chaleur mais doit aussi être limitée, pour limiter la contribution de l'élément de transfert thermique à la rigidité d'extension circonférentielle de l'assemblage de la bandelette et de l'élément de transfert thermique.

Avantageusement, tout élément filaire globalement circonférentiel d'un élément de transfert thermique a un diamètre au moins égal à 0.1 mm, pour garantir la faisabilité industrielle.

Le nombre d'éléments filaires globalement circonférentiels est compris entre 1 et 10 par cm de largeur de bande, en vue de garantir l'évacuation, selon la direction circonférentielle, d'une quantité suffisante de calories générées en extrémité de couche d'armature de travail.

La somme des sections droites des éléments filaires globalement circonférentiels par cm de largeur de bande doit être inférieure à 0.5 mm² en vue limiter la contribution de l'élément de transfert thermique à la rigidité d'extension circonférentielle globale de l'assemblage de la bandelette et de l'élément de transfert thermique.

L'effort circonférentiel par unité de largeur axiale, ou tension répartie, d'un élément de transfert thermique est au plus égal à 0.3 fois l'effort circonférentiel par unité de largeur axiale de la bandelette en contact avec l'élément de transfert thermique, ce qui permet de limiter la contribution de l'élément de transfert thermique à la rigidité d'extension circonférentielle globale de l'assemblage de la bandelette et de l'élément de transfert thermique.

Un élément de transfert thermique comprend avantageusement des éléments filaires globalement circonférentiels présentant des oscillations géométriques périodiques dans un plan circonférentiel perpendiculaire à la direction axiale. Ces oscillations géométriques périodiques peuvent être, de façon non exhaustive, des plis en forme de V alternés ou des ondulations en forme de sinusoïde. La présence d'oscillations géométriques périodiques augmente la capacité d'extension circonférentielle de l'élément de transfert thermique et, par conséquent, diminue le risque de rupture en extension de l'élément de transfert thermique.

Avantageusement, le rapport entre l'amplitude crête-crête des oscillations géométriques périodiques et la longueur d'onde de la période est supérieur à 0.05 pour assurer à l'élément de transfert thermique une capacité d'extension circonférentielle suffisante.

Les caractéristiques et autres avantages de l'invention seront mieux compris à l'aide des figures annexées 1 à 4b:
- la figure 1 présente une coupe méridienne d'un sommet de pneumatique selon l'invention, schématisant en particulier les bandelettes d'une couche d'armature de travail et les bandes globalement circonférentielles de l'élément de transfert thermique correspondantes.
- la figure 2a est un schéma de l'assemblage d'une bandelette de couche d'armature de travail et d'un élément de transfert thermique selon un premier mode de réalisation de l'invention.
- la figure 2b est une vue en plan d'un élément de transfert thermique selon un premier mode de réalisation de l'invention.
- la figure 3a est un schéma de l'assemblage d'une bandelette de couche d'armature de travail et d'un élément de transfert thermique selon un deuxième mode de réalisation de l'invention.
- la figure 3b est une vue en plan d'un élément de transfert thermique selon un deuxième mode de réalisation de l'invention.
- la figure 4a est un schéma de l'assemblage d'une bandelette de couche d'armature de travail et d'un élément de transfert thermique selon un troisième mode de réalisation de l'invention.
- la figure 4b est une vue en plan d'un élément de transfert thermique selon un troisième mode de réalisation de l'invention.

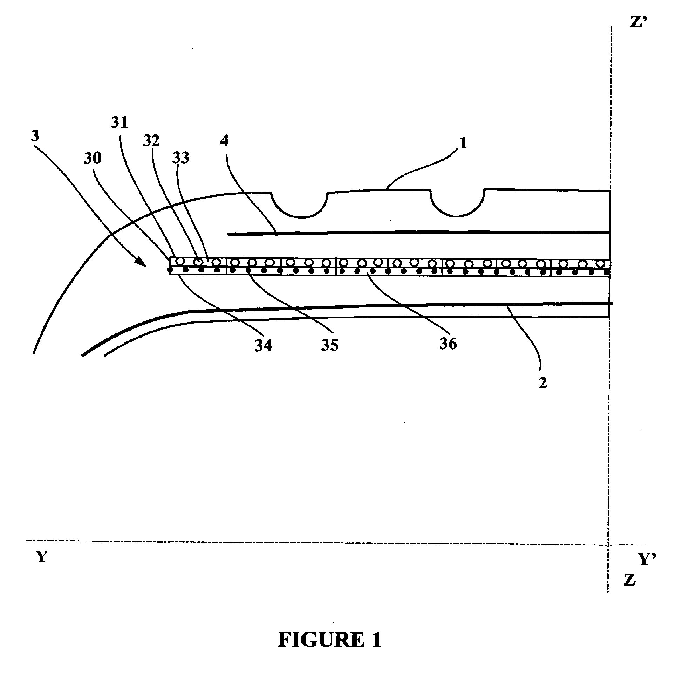

Les figures 1 à 4b ne sont pas représentées à l'échelle, en vue de faciliter la compréhension de l'invention.

La figure 1 présente une coupe méridienne, c'est-à-dire dans un plan méridien, du sommet d'un pneumatique selon l'invention. Elle représente un sommet destiné à entrer en contact avec le sol par l'intermédiaire d'une bande de roulement 1, l'armature de carcasse radiale 2, l'armature de sommet, radialement intérieure à la bande de roulement et radialement extérieure à l'armature de carcasse radiale, comprenant une armature de travail 3 et une armature de protection 4. L'armature de travail 3, constituée d'une superposition de couches d'armature de travail, n'est pas intégralement représentée : une seule couche d'armature de travail 30 est représentée en vue de faciliter la compréhension de l'invention. La couche d'armature de travail est constituée de bandelettes 31 globalement circonférentielles, axialement juxtaposées. Chaque bandelette est constituée d'éléments de renforcement textiles 32 parallèles entre eux enrobés par un matériau polymérique d'enrobage 33. Chaque bandelette est en contact, sur sa face axiale radialement intérieure, avec un élément de transfert thermique 34, constitués d'éléments filaires globalement circonférentiels 35 et d'un matériau polymérique d'enrobage 36.

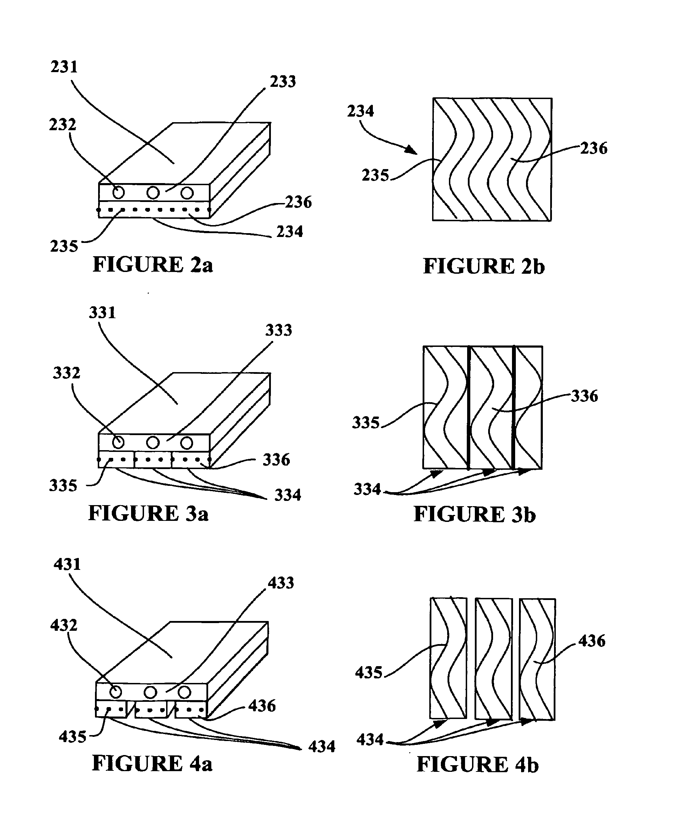

La figure 2a est un schéma de l'assemblage d'une bandelette 231 de couche d'armature de travail et d'un élément de transfert thermique 234, selon un premier mode de réalisation de l'invention. La bandelette 231, constituée d'éléments de renforcement textiles 232 parallèles entre eux, enrobés par un matériau polymérique d'enrobage 233, est en contact, sur sa face axiale radialement intérieure, avec un élément de transfert thermique 234, constitués d'éléments filaires globalement circonférentiels 235 et d'un matériau polymérique d'enrobage 236. L'élément de transfert thermique 234 est constitué d'une bande globalement circonférentielle unique, dont la largeur axiale est égale à la largeur axiale de la bandelette 231 en contact.

La figure 2b est une vue en plan d'un élément de transfert thermique selon un premier mode de réalisation de l'invention, constitué d'une bande globalement circonférentielle unique 234, dont la largeur axiale est égale à la largeur axiale de la bandelette 231 en contact, avec le réseau bidimensionnel de transfert thermique. La bande globalement circonférentielle unique 234 est constituée d'éléments filaires globalement circonférentiels 235 et d'un matériau polymérique d'enrobage 236.

La figure 3a est un schéma de l'assemblage d'une bandelette 331 de couche d'armature de travail et d'un élément de transfert thermique 334, selon un deuxième mode de réalisation de l'invention. La bandelette 331, constituée d'éléments de renforcement textiles 332 parallèles entre eux, enrobés par un matériau polymérique d'enrobage 333, est en contact, sur sa face axiale radialement intérieure, avec un élément de transfert thermique 334, constitués d'éléments filaires globalement circonférentiels 335 et d'un matériau polymérique d'enrobage 336. L'élément de transfert thermique 334 est constitué d'une pluralité de bandes globalement circonférentielles axialement juxtaposées, dont la largeur axiale totale, somme des largeurs axiales de chacune des bandes globalement circonférentielles, est égale à la largeur axiale de la bandelette 331 en contact.

La figure 3b est une vue en plan d'un élément de transfert thermique selon un deuxième mode de réalisation de l'invention, constitué d'une pluralité de bandes globalement circonférentielles axialement juxtaposées 334, dont la largeur axiale est égale à la largeur axiale de la bandelette 331 en contact avec l'élément de transfert thermique. Les bandes globalement circonférentielles axialement juxtaposées 334 sont constituées d'éléments filaires globalement circonférentiels 335 et d'un matériau polymérique d'enrobage 336.

La figure 4a est un schéma de l'assemblage d'une bandelette 431 de couche d'armature de travail et d'un élément de transfert thermique 434, selon un troisième mode de réalisation de l'invention. La bandelette, constituée d'éléments de renforcement textiles 432 parallèles entre eux, enrobés par un matériau polymérique d'enrobage 433, est en contact, sur sa face axiale radialement intérieure, avec un élément de transfert thermique 434, constitués d'éléments filaires globalement circonférentiels 435 et d'un matériau polymérique d'enrobage 436. L'élément de transfert thermique 434 est constitué d'une pluralité de bandes globalement circonférentielles axialement disjointes, réparties sur la largeur axiale de la bandelette 431 en contact.

La figure 4b est une vue en plan d'un élément de transfert thermique selon un troisième mode de réalisation de l'invention, constitué d'une pluralité de bandes globalement circonférentielles axialement disjointes 434, réparties sur la largeur axiale de la bandelette 431 en contact avec l'élément de transfert thermique. Les bandes globalement circonférentielles axialement disjointes 434 sont constituées d'éléments filaires globalement circonférentiels 435 et d'un matériau polymérique d'enrobage 436.

Les inventeurs ont réalisé l'invention selon son premier mode de réalisation, pour un pneumatique d'avion de dimension 46x17R20, dont l'usage est caractérisé par une pression nominale égale à 15.9 bars, une charge statique nominale égale à 20473 daN et une vitesse maximale de référence égale à 225 km/h. L'armature de sommet de travail de ce pneumatique comprend 9 couches d'armature de travail, constituées de bandelettes globalement circonférentielles, 3 d'entre elles étant posées en spires juxtaposées selon la direction axiale, et 6 d'entre elles étant enroulées en zigzag, sur une période par tour d'enroulement, l'angle maximal des éléments de renforcement textiles des bandelettes étant égal à 11° par rapport à la direction circonférentielle. Chaque bandelette est constituée d'éléments de renforcement de type hybride c'est-à-dire constitués d'une combinaison de filés de filaments en polyamides aromatiques et de filés de filaments en polyamides aliphatiques, enrobés par un matériau polymérique d'enrobage dont la conductivité thermique est égale à 0.3 W.m⁻¹.K⁻¹. Chaque bandelette est en contact, sur sa face radialement intérieure, avec un élément de transfert thermique, constitué d'une bande globalement circonférentielle unique, elle-même constituée d'éléments filaires de type câble en aluminium de conductivité thermique égale à 237 W.m⁻¹.K⁻¹. Ces éléments filaires globalement circonférentiels, de diamètre au plus égal à 0.9 mm, sont répartis une direction globalement circonférentielle. La somme des sections droites des éléments filaires globalement circonférentiels par cm de largeur de bande doit être inférieure à 0.5 mm².

Les inventeurs ont montré par simulation numérique par éléments finis sur un pneumatique en roulage stationnaire à une vitesse de 10 km/h, sous une charge statique nominale de 20.5 tonnes et une pression nominale de 15.9 bars, que l'écart de températures entre l'extrémité axiale et la partie centrale, au voisinage du plan équatorial, de la couche d'armature de travail la plus sollicitée thermiquement passe de 90.5 °C à 78.5°C quand on passe du pneumatique de référence, avec des bandelettes sans élément de transfert thermique, au pneumatique selon l'invention. Dans l'exemple choisi, l'invention permet ainsi une diminution de 12°C de la température maximale en extrémité d'armature de sommet.

L'invention peut également être étendue à d'autres modes de réalisation tels que, par exemple et de façon non exhaustive, un élément de transfert thermique comprenant deux couches superposées, chaque couche comprenant des éléments filaires globalement circonférentiels, parallèles entre eux et présentant des oscillations géométriques périodiques parallèles à la bandelette en contact, les oscillations géométriques périodiques étant déphasées entre les deux couches, de manière à,constituer un réseau bidimensionnel.

## Revendications

1. Pneumatique pour avion, comprenant :
- un sommet destiné à entrer en contact avec le sol par l'intermédiaire d'une bande de roulement (1) et relié par deux flancs à deux bourrelets destinés à entrer en contact avec une jante,
- une armature de carcasse radiale (2) reliant les deux bourrelets,
- une armature de sommet, radialement intérieure à la bande de roulement et radialement extérieure à l'armature de carcasse radiale, comprenant une armature de travail (3) et une armature de protection (4),
- l'armature de travail, radialement intérieure à l'armature de protection, comprenant au moins une couche d'armature de travail (30),
- chaque couche d'armature de travail étant constituée de bandelettes (31, 231, 331, 431) globalement circonférentielles, axialement juxtaposées,
- chaque bandelette étant constituée d'éléments de renforcement textiles (32, 232 , 332, 432) parallèles entre eux enrobés par un matériau polymérique d'enrobage (33, 233 , 333, 433),
**caractérisé en ce que** chaque bandelette d'au moins une couche d'armature de travail est en contact, sur au moins sa face axiale radialement intérieure, avec un élément de transfert thermique (34, 234, 334, 434), comprenant des éléments filaires globalement circonférentiels (35, 235, 335, 435), parallèles entre eux et constitués d'un matériau conducteur de chaleur, **en ce que** la conductivité thermique du matériau conducteur de chaleur d'un élément filaire globalement circonférentiel est au moins égale à 50 fois la conductivité thermique du matériau polymérique d'enrobage des éléments de renforcement textiles de la bandelette en contact avec l'élément de transfert thermique et **en ce qu'**un élément de transfert thermique (34, 234, 334, 434) comprend des éléments filaires globalement circonférentiels (35, 235, 335, 435) présentant des oscillations géométriques périodiques parallèles à la bandelette en contact.

2. Pneumatique selon la revendication 1, **caractérisé en ce que** chaque bandelette (31, 231, 331, 431) de chaque couche d'armature de travail (30) est en contact, sur au moins sa face axiale radialement intérieure, avec un élément de transfert thermique (34, 234, 334, 434), comprenant des éléments filaires globalement circonférentiels (35, 235, 335, 435), parallèles entre eux et constitués d'un matériau conducteur de chaleur.

3. Pneumatique selon l'une quelconque des revendications 1 ou 2, **caractérisé en ce qu'**un élément de transfert thermique est constitué d'au moins une bande globalement circonférentielle (34, 234, 334, 434).

4. Pneumatique selon l'une quelconque des revendications 1 à 3, **caractérisé en ce qu'**un élément de transfert thermique est constitué d'une bande globalement circonférentielle unique (34, 234), dont la largeur axiale est égale à la largeur axiale de la bandelette (31, 231) en contact avec l'élément de transfert thermique.

5. Pneumatique selon l'une quelconque des revendications 1 à 3, **caractérisé en ce qu'**un élément de transfert thermique est constitué d'une pluralité de bandes globalement circonférentielles axialement juxtaposées (334), dont la somme des largeurs axiales est au plus égale à la largeur axiale de la bandelette (331) en contact avec l'élément de transfert thermique.

6. Pneumatique selon l'une quelconque des revendications 1 à 3, **caractérisé en ce qu'**un élément de transfert thermique est constitué d'une pluralité de bandes globalement circonférentielles axialement disjointes (434), dont la somme des largeurs axiales est au plus égale à la largeur axiale de la bandelette (431) en contact avec l'élément de transfert thermique.

7. Pneumatique selon l'une quelconque des revendications 1 à 6, **caractérisé en ce qu'**un élément de transfert thermique (34, 234, 334, 434) comprend un matériau polymérique d'enrobage (36, 236, 336, 436) des éléments filaires globalement circonférentiels (35, 235, 335, 435).

8. Pneumatique selon l'une quelconque des revendications 1 à 7, **caractérisé en ce que** tout élément filaire globalement circonférentiel (35, 235, 335, 435) d'un élément de transfert thermique (34, 234, 334, 434) est un câble.

9. Pneumatique selon l'une quelconque des revendications 1 à 8, **caractérisé en ce que** tout élément filaire globalement circonférentiel (35, 235, 335, 435) d'un élément de transfert thermique (34, 234, 334, 434) est un câble métallique.

10. Pneumatique selon l'une quelconque des revendications 1 à 9, **caractérisé en ce que** tout élément filaire globalement circonférentiel (35, 235, 335, 435) d'un élément de transfert thermique (34, 234, 334, 434) est un câble en aluminium.

11. Pneumatique selon l'une quelconque des revendications 9 ou 10, **caractérisé en ce que** tout élément filaire globalement circonférentiel (35, 235, 335, 435) d'un élément de transfert thermique (34, 234, 334, 434) a un diamètre au plus égal à 0.9 mm et au moins égal à 0.1 mm.

12. Pneumatique selon l'une quelconque des revendications 9 à 11, **caractérisé en ce que** le nombre d'éléments filaires globalement circonférentiels est compris entre 1 et 10 par cm de largeur de bande.

13. Pneumatique selon l'une quelconque des revendications 9 à 12, **caractérisé en ce que** la somme de sections droites des éléments filaires globalement circonférentiels (35, 235, 335, 435) par cm de largeur de bande doit être inférieure à 0.5 mm².

14. Pneumatique l'une quelconque des revendications 1 à 13, **caractérisé en ce que** l'effort circonférentiel par unité de largeur axiale, ou tension répartie, d'un élément de transfert thermique (34, 234, 334, 434) est au plus égal à 0.3 fois l'effort circonférentiel par unité de largeur axiale de la bandelette (31, 231, 331, 431) en contact avec l'élément de transfert thermique.

15. Pneumatique selon l'une quelconque des revendications 1 à 14, **caractérisé en ce qu'**un élément de transfert thermique (34, 234, 334, 434) comprend des éléments filaires globalement circonférentiels (35, 235, 335, 435) présentant des oscillations géométriques périodiques dans un plan circonférentiel perpendiculaire à la direction axiale.

## Patentansprüche

1. Flugzeugreifen, welcher aufweist:
- einen Scheitel, der dazu bestimmt ist, über einen Laufstreifen (1) mit dem Boden in Kontakt zu kommen, und über zwei Seitenwände mit zwei Wülsten verbunden ist, die dazu bestimmt sind, mit einer Felge in Kontakt zu kommen,
- eine radiale Karkassenbewehrung (2), welche die zwei Wülste verbindet,
- eine Scheitelbewehrung, die sich radial innerhalb des Laufstreifens und radial außerhalb der radialen Karkassenbewehrung befindet und die eine Arbeitsbewehrung (3) und eine Schutzbewehrung (4) aufweist,
- wobei die Arbeitsbewehrung, die sich radial innerhalb der Schutzbewehrung befindet, mindestens eine Arbeitsbewehrungsschicht (30) aufweist,
- wobei jede Arbeitsbewehrungsschicht aus Bändern (31, 231, 331, 431) besteht, die sich im Wesentlichen in Umfangsrichtung erstrecken und axial nebeneinander angeordnet sind,
- wobei jedes Band aus zueinander parallelen textilen Verstärkungselementen (32, 232, 332, 432) besteht, die mit einem polymeren Umhüllungsmaterial (33, 233, 333, 433) umhüllt sind,
**dadurch gekennzeichnet, dass** sich jedes Band mindestens einer Arbeitsbewehrungsschicht wenigstens auf seiner radial inneren axialen Seite mit einem Wärmeübertragungselement (34, 234, 334, 434) in Kontakt befindet, das im Wesentlichen in Umfangsrichtung verlaufende drahtförmige Elemente (35, 235, 335, 435) aufweist, die zueinander parallel sind und aus einem wärmeleitenden Material bestehen, dadurch, dass die Wärmeleitfähigkeit des wärmeleitenden Materials eines im Wesentlichen in Umfangsrichtung verlaufenden drahtförmigen Elements mindestens gleich dem 50-Fachen der Wärmeleitfähigkeit des polymeren Umhüllungsmaterials der textilen Verstärkungselemente des mit dem Wärmeübertragungselement in Kontakt befindlichen Bandes ist, und dadurch, dass ein Wärmeübertragungselement (34, 234, 334, 434) im Wesentlichen in Umfangsrichtung verlaufende drahtförmige Elemente (35, 235, 335, 435) aufweist, welche periodische geometrische Wellen aufweisen, die zu dem in Kontakt befindlichen Band parallel sind.

2. Reifen nach Anspruch 1, **dadurch gekennzeichnet, dass** sich jedes Band (31, 231, 331, 431) jeder Arbeitsbewehrungsschicht (30) wenigstens auf seiner radial inneren axialen Seite mit einem Wärmeübertragungselement (34, 234, 334, 434) in Kontakt befindet, das im Wesentlichen in Umfangsrichtung verlaufende drahtförmige Elemente (35, 235, 335, 435) aufweist, die zueinander parallel sind und aus einem wärmeleitenden Material bestehen.

3. Reifen nach einem der Ansprüche 1 oder 2, **dadurch gekennzeichnet, dass** ein Wärmeübertragungselement aus mindestens einem, im Wesentlichen in Umfangsrichtung verlaufenden Streifen (34, 234, 334, 434) besteht.

4. Reifen nach einem der Ansprüche 1 bis 3, **dadurch gekennzeichnet, dass** ein Wärmeübertragungselement aus einem einzigen, im Wesentlichen in Umfangsrichtung verlaufenden Streifen (34, 234) besteht, dessen axiale Breite gleich der axialen Breite des Bandes (31, 231) ist, das sich mit dem Wärmeübertragungselement in Kontakt befindet.

5. Reifen nach einem der Ansprüche 1 bis 3, **dadurch gekennzeichnet, dass** ein Wärmeübertragungselement aus mehreren, im Wesentlichen in Umfangsrichtung verlaufenden, axial nebeneinander angeordneten Streifen (334) besteht, deren Summe der axialen Breiten höchstens gleich der axialen Breite des Bandes (331) ist, das sich mit dem Wärmeübertragungselement in Kontakt befindet.

6. Reifen nach einem der Ansprüche 1 bis 3, **dadurch gekennzeichnet, dass** ein Wärmeübertragungselement aus mehreren, im Wesentlichen in Umfangsrichtung verlaufenden, axial getrennten Streifen (434) besteht, deren Summe der axialen Breiten höchstens gleich der axialen Breite des Bandes (431) ist, das sich mit dem Wärmeübertragungselement in Kontakt befindet.

7. Reifen nach einem der Ansprüche 1 bis 6, **dadurch gekennzeichnet, dass** ein Wärmeübertragungselement (34, 234, 334, 434) ein polymeres Umhüllungsmaterial (36, 236, 336, 436) der im Wesentlichen in Umfangsrichtung verlaufenden drahtförmigen Elemente (35, 235, 335, 435) aufweist.

8. Reifen nach einem der Ansprüche 1 bis 7, **dadurch gekennzeichnet, dass** jedes im Wesentlichen in Umfangsrichtung verlaufende drahtförmige Element (35, 235, 335, 435) eines Wärmeübertragungselements (34, 234, 334, 434) ein Seil ist.

9. Reifen nach einem der Ansprüche 1 bis 8, **dadurch gekennzeichnet, dass** jedes im Wesentlichen in Umfangsrichtung verlaufende drahtförmige Element (35, 235, 335, 435) eines Wärmeübertragungselements (34, 234, 334, 434) ein Metallseil ist.

10. Reifen nach einem der Ansprüche 1 bis 9, **dadurch gekennzeichnet, dass** jedes im Wesentlichen in Umfangsrichtung verlaufende drahtförmige Element (35, 235, 335, 435) eines Wärmeübertragungselements (34, 234, 334, 434) ein Aluminiumseil ist.

11. Reifen nach einem der Ansprüche 9 oder 10, **dadurch gekennzeichnet, dass** jedes im Wesentlichen in Umfangsrichtung verlaufende drahtförmige Element (35, 235, 335, 435) eines Wärmeübertragungselements (34, 234, 334, 434) einen Durchmesser aufweist, der höchstens 0,9 mm und mindestens 0,1 mm beträgt.

12. Reifen nach einem der Ansprüche 9 bis 11, **dadurch gekennzeichnet, dass** die Anzahl im Wesentlichen in Umfangsrichtung verlaufender drahtförmiger Elemente zwischen 1 und 10 pro cm Streifenbreite beträgt.

13. Reifen nach einem der Ansprüche 9 bis 12, **dadurch gekennzeichnet, dass** die Summe der geraden Querschnitte der im Wesentlichen in Umfangsrichtung verlaufenden drahtförmigen Elemente (35, 235, 335, 435) pro cm Streifenbreite kleiner als 0,5 mm² ist.

14. Reifen nach einem der Ansprüche 1 bis 13, **dadurch gekennzeichnet, dass** die Beanspruchung in Umfangsrichtung pro Einheit der axialen Breite, oder verteilte Spannung, eines Wärmeübertragungselements (34, 234, 334, 434) höchstens gleich dem 0,3-Fachen der Beanspruchung in Umfangsrichtung pro Einheit der axialen Breite des mit dem Wärmeübertragungselement in Kontakt befindlichen Bandes (31, 231, 331, 431) ist.

15. Reifen nach einem der Ansprüche 1 bis 14, **dadurch gekennzeichnet, dass** ein Wärmeübertragungselement (34, 234, 334, 434) im Wesentlichen in Umfangsrichtung verlaufende drahtförmige Elemente (35, 235, 335, 435) aufweist, welche periodische geometrische Wellen in einer zur axialen Richtung senkrechten Umfangsebene aufweisen.

## Claims

1. Aeroplane tyre comprising:
- a crown intended to come into contact with the ground via a tread (1) and connected by two sidewalls to two beads intended to come into contact with a rim,
- a radial carcass reinforcement (2) connecting the two beads,
- a crown reinforcement, radially on the inside of the tread and radially on the outside of the radial carcass reinforcement, comprising a working reinforcement (3) and a protective reinforcement (4),
- the working reinforcement, radially on the inside of the protective reinforcement, comprising at least one layer (30) of working reinforcement,
- each layer of working reinforcement consisting of axially juxtaposed substantially circumferential strips (31, 231, 331, 431),
- each strip being made up of mutually parallel textile reinforcing elements (32, 232, 332, 432) coated with a polymer coating material (33, 233, 333, 433),
**characterized in that** each strip of at least one layer of working reinforcement is in contact, over at least its radially inner axial face, with a heat transfer element (34, 234, 334, 434) comprising mutually parallel substantially circumferential threadlike elements (35, 235, 335, 435) made of a heat-conducting material, **in that** the thermal conductivity of the heat-conducting material of a substantially circumferential threadlike element is at least equal to 50 times the thermal conductivity of the polymer coating material of the textile reinforcing elements of the strip in contact with the heat transfer element, and **in that** a heat transfer element (34, 234, 334, 434) comprises substantially circumferential threadlike elements (35, 235, 335, 435) that have periodic geometric oscillations parallel to the strip in contact.

2. Tyre according to Claim 1, **characterized in that** each strip (31, 231, 331, 431) of each layer of working reinforcement (30) is in contact, over at least its radially inner axial face, with a heat transfer element (34, 234, 334, 434) comprising mutually parallel substantially circumferential threadlike elements (35, 235, 335, 435) made of a heat-conducting material.

3. Tyre according to either one of Claims 1 and 2, **characterized in that** a heat transfer element is made up of at least one substantially circumferential band (34, 234, 334, 434).

4. Tyre according to any one of Claims 1 to 3, **characterized in that** a heat transfer element is made up of a single substantially circumferential band (34, 234) of which the axial width is equal to the axial width of the strip (31, 231) in contact with the heat transfer element.

5. Tyre according to any one of Claims 1 to 3, **characterized in that** a heat transfer element is made up of a plurality of axially juxtaposed substantially circumferential bands (334), of which the sum of the axial widths is at most equal to the axial width of the strip (331) in contact with the heat transfer element.

6. Tyre according to any one of Claims 1 to 3, **characterized in that** a heat transfer element is made up of a plurality of axially disjointed substantially circumferential bands (434) of which the sum of the axial widths is at most equal to the axial width of the strip (431) in contact with the heat transfer element.

7. Tyre according to any one of Claims 1 to 6, **characterized in that** a heat transfer element (34, 234, 334, 434) comprises a polymer coating material (36, 236, 336, 436) for coating the substantially circumferential threadlike elements (35, 235, 335, 35).

8. Tyre according to any one of Claims 1 to 7, **characterized in that** any substantially circumferential threadlike element (35, 235, 335, 435) of a heat transfer element (34, 234, 334, 434) is a cord.

9. Tyre according to any one of Claims 1 to 8, **characterized in that** any substantially circumferential threadlike element (35, 235, 335, 435) of a heat transfer element (34, 234, 334, 434) is a metallic cord.

10. Tyre according to any one of Claims 1 to 9, **characterized in that** any substantially circumferential threadlike element (35, 235, 335, 435) of a heat transfer element (34, 234, 334, 434) is an aluminium cord.

11. Tyre according to either one of Claims 9 and 10, **characterized in that** any substantially circumferential threadlike element (35, 235, 335, 435) of a heat transfer element (34, 234, 334, 434) has a diameter at most equal to 0.9 mm and at least equal to 0.1 mm.

12. Tyre according to any one of Claims 9 to 11, **characterized in that** the number of substantially circumferential threadlike elements is comprised between 1 and 10 per cm of width of band.

13. Tyre according to any one of Claims 9 to 12, **characterized in that** the sum of the cross sections of the substantially circumferential threadlike elements (35, 235, 335, 435) per cm of width of band needs to be below 0.5 mm².

14. Tyre according to any one of Claims 1 to 13, **characterized in that** the circumferential load per unit axial width, or distributed tension, of a heat transfer element (34, 234, 334, 434) is at most equal to 0.3 times the circumferential load per unit axial width of the strip (31, 231, 331, 431) in contact with the heat transfer element.

15. Tyre according to any one of Claims 1 to 14, **characterized in that** a heat transfer element (34, 234, 334, 434) comprises substantially circumferential threadlike elements (35, 235, 335, 435) that have periodic geometric oscillations in a circumferential plane perpendicular to the axial direction.
